(19) Europäisches Patentamt

European Patent Office

Office européen des brevets

(11) **EP 1 065 363 B1**

(12) **FASCICULE DE BREVET EUROPEEN**

(45) Date de publication et mention
de la délivrance du brevet:
**06.05.2004 Bulletin 2004/19**

(51) Int Cl.7: **F02D 41/14**

(21) Numéro de dépôt: **00401882.6**

(22) Date de dépôt: **30.06.2000**

(54) **Procédé de contrôle du couple d'un moteur à combustion interne**

Verfahren zur Regelung des Drehmoments einer Brennkraftsmaschine

Method to control the torque of an internal combustion engine

(84) Etats contractants désignés:
**DE ES GB IT**

(30) Priorité: **02.07.1999 FR 9908576**

(43) Date de publication de la demande:
**03.01.2001 Bulletin 2001/01**

(73) Titulaire: **Renault s.a.s.**
**92100 Boulogne Billancourt (FR)**

(72) Inventeur: **Beurthey, Stephan**
**91430 Vauhallan (FR)**

(56) Documents cités:
**EP-A- 0 120 730**  **EP-A- 0 610 508**
**EP-A- 0 781 912**  **US-A- 5 117 793**

**Description**

La présente invention concerne un procédé de contrôle du couple produit par les cylindres d'un moteur à combustion interne et présentant des dispersions néfastes au bon fonctionnement d'un tel moteur.

Dans un moteur à quatre cylindres, à combustion interne, on enflamme un mélange air-carburant injecté entre la paroi de chaque cylindre et le piston destiné à coulisser dans le cylindre. La combustion du carburant mélangé à l'air dégage une forte chaleur et crée une augmentation considérable des gaz. Il en résulte une pression importante dans le cylindre, qui se traduit par une force s'exerçant sur le cylindre qu'elle déplace en produisant un travail. Le rôle du système bielle-manivelle consiste à récupérer ce travail pour le communiquer aux roues motrices du véhicule.

Pour un fonctionnement selon un cycle Beau de Rochas à quatre temps, le premier temps réalise l'admission, dans un cylindre, du mélange gazeux air-carburant. La soupape d'admission s'ouvre quand le piston est au Point Mort Haut (PMH) et se ferme quand il est au Point Mort Bas (PMB), créant une dépression aspirant le mélange.
Au deuxième temps est réalisée la compression du mélange gazeux, par remontée du piston du Point Mort Bas au Point Mort Haut, les soupapes étant fermées.
Au cours du troisième temps de la combustion du mélange gazeux par inflammation provoquée par l'étincelle d'une bougie d'allumage, la pression augmente sur le piston qui redescend du Point Mort Haut vers le Point Mort Bas. Cette détente crée un travail.
Enfin, au cours du quatrième temps de l'échappement, les gaz brûlés sont chassés par le piston vers l'extérieur, par la soupape d'échappement ouverte.
Chacun de ces temps correspond à un demi-tour du vilebrequin, soit 180°.

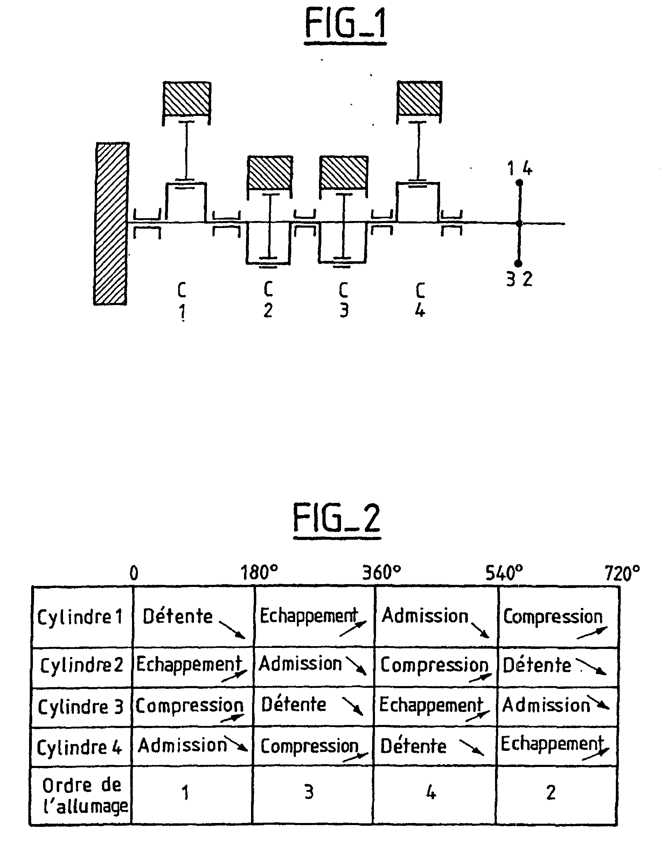

Comme le montre la figure 1 qui est un schéma simplifié d'un vilebrequin associé à quatre cylindres $c_1$ à $c_4$, c'est la forme du vilebrequin qui détermine entre autres l'ordre d'allumage.
Le tableau de la figure 2 explicite les quatre temps dans lesquels se trouvent successivement les quatre cylindres au cours de deux tours du vilebrequin soit 720°.

Le travail créé par unité de temps, dans chaque cylindre, est égal au produit du couple produit par chaque cylindre par la vitesse angulaire.

Or, ce travail produit par les différents cylindres d'un moteur n'est pas identique, en raison des dispersions de fabrication des composants du moteur, de son vieillissement et des écarts entre les combustions réalisées dans les cylindres. Ces variations engendrent des vibrations, du bruit, une surconsommation de carburant ou une augmentation des émissions de polluants.

Le but de l'invention est précisément de contrôler les dispersions de couple produit par chacun des quatre cylindres d'un moteur, en les mesurant tout d'abord, afin de piloter ensuite un des composants du mélange gazeux pour compenser ces dispersions.

Pour cela, l'objet de l'invention est un procédé de contrôle du couple produit par chacun des quatre cylindres d'un moteur à combustion interne de véhicule automobile dont le fonctionnement est piloté par un calculateur électronique de contrôle moteur, comportant une étape d'estimation du couple pendant chaque demi-tour de vilebrequin, caractérisé en ce qu'il comporte les étapes suivantes, réalisées par le calculateur de contrôle moteur :

- une mesure et une mémorisation de la durée $T_k$ des demi-tours successifs du vilebrequin d'ordre k, k variant de 1 à N ;
- une estimation de l'écart de couple $\Delta C^i_k$ dû au cylindre i, i entier variant de 1 à 4, en détente pendant le demi-tour k par rapport au trois autres cylindres du moteur, selon la formule :

$$\Delta C^i_k = (C_{k-1} + C_{k+1})/3 + (C_{k-2} + C_{k+2})/6 - C_k$$

avec $C_k$ : le couple estimé pendant le demi-tour k, et la somme des écarts de couple des cylindres étant nulle.

Selon une autre caractéristique de l'invention, le procédé de contrôle du couple comporte une étape de régulation de la masse de carburant injectée dans chaque cylindre par multiplication de la masse de carburant $M_0$, déterminée par le calculateur de contrôle moteur en fonction de la demande de couple du conducteur, par un coefficient $\Delta\Omega^i_k$ de filtrage de l'écart de couple relatif défini selon la formule :

$$\Delta\Omega^i_k = \Delta\Omega^i_{k-4} + \alpha \left[(\Delta C^i_k/C_k) - \Delta\Omega^i_{k-4}\right]$$

avec $\alpha$ : un facteur compris entre 0 et 1.

D'autres caractéristiques et avantages de l'invention apparaîtront à la lecture de la description du procédé de contrôle du couple d'un moteur , les figures 1 et 2 déjà décrites correspondant à l'état de l'art.

Le procédé de contrôle selon l'invention utilise un dispositif classique de repérage angulaire du vilebrequin, par exemple celui qui est utilisé par le système d'allumage. Ce dispositif permet de déterminer la durée nécessaire au vilebrequin pour tourner d'un angle donné, en particulier pour effectuer un demi-tour. Dans le cas d'un moteur à quatre cylindres fonctionnant selon les quatre temps du cycle de Beau de Rochas, l'origine de la mesure d'un demi-tour est le Point Mort Haut de chaque piston. La détente du cylindre référencé i, i variant de 1 à 4, s'effectue pendant un demi-tour de vilebrequin.

Selon une première étape, le procédé de contrôle mesure la durée de chaque demi-tour, entre deux PMH successifs, puis la stocke dans la mémoire du calculateur.

Selon une deuxième étape, le procédé estime le couple transmis aux roues par le cylindre i qui est en détente, donc responsable du travail produit, pendant le demi-tour k dont la durée a été mesurée à l'étape précédente.

Un mode d'estimation de ce couple $C_k$ transmis aux roues pendant le demi-tour k prend en compte la différence de durée $(T_k - T_{k-i})$ entre le demi-tour d'ordre k et celui d'ordre k-1, selon la formule :

$$(1) \qquad C_k = K * (T_k - T_{k-1})/(T_K)^3$$

K étant une constante.

La troisième étape du procédé consiste à calculer une estimation de l'écart de couple $\Delta C^i_k$ dû au cylindre i qui est précisément en détente pendant le demi-tour k par rapport aux trois autres cylindres du moteur, selon la formule :

$$(2) \qquad \Delta C^i_k = (C_{k-1} + C_{k+1)}/3 + (C_{k-2} + C_{k+2})/6 - C_k.$$

Entre les PMH d'ordre k-2 et k+2, le procédé a mesuré successivement par exemple les couples :

$C_{k-2}$ produit par le cylindre 1 ;
$C_{k-1}$ produit par le cylindre 3 ;
$C_k$ produit par le cylindre 4 ;
$C_{k+1}$ produit par le cylindre 2 ;
$C_{k+2}$ produit par le cylindre 1,

et calcule au PMH k, l'écart de couple produit par le cylindre 4 par rapport aux cylindres 1, 2 et 3. La somme des écarts de couple entre les cylindres est nulle.

Dans le cas particulier d'une estimation du couple $C_k$ selon la formule (1) précédente, l'écart de couple $\Delta C^i_k$ mesuré par le calculateur électronique devient :

$$(3) \qquad \Delta C^i_k = K*[8(T_K-T_{K-1})+T_{k-2}+T_k-3-Tk_{+2}-T_{k+1}]/(T_k)^3$$

Les écarts de couple obtenus représentent donc les écarts de couple par rapport à la valeur moyenne du couple des quatre cylindres.

D'après une autre caractéristique essentielle de l'invention, le procédé de contrôle de couple comporte une étape de régulation d'un des composants du mélange gazeux pour compenser cet écart mesuré.

En particulier, la régulation porte sur l'équilibrage des masses d'essence injectées par les injecteurs dans les quatre cylindres du moteur. Le calculateur électronique détermine la masse d'essence $M_0$ de base que chaque injecteur doit envoyer dans le cylindre auquel il est associé. Cette masse $M_0$ est déterminée en fonction de la demande de couple formulée par le conducteur. Le procédé de contrôle corrige la masse de carburant $M_0$ par un coefficient de filtrage de l'écart de couple relatif $\Delta\Omega^i_k$, pour délivrer la masse de carburant $M_i$ à injecter par l'injecteur alimentant le cylindre i au PMH d'ordre k :

$$M_i = M_0. \, \Delta\Omega^i_k.$$

Le coefficient de filtrage $\Delta\Omega^i_k$ est calculé après chaque nouveau calcul de l'écart de couple $\Delta C^i_k$ par la formule :

$$(4) \qquad \Delta\Omega^i_k = \Delta\Omega^i_{k-4} + \alpha[(\Delta C^i_k/C_k) - \Delta\Omega^i_{k-4}]$$

avec $\alpha$ : facteur de filtrage compris entre 0 et 1 pour donner la rapidité de correction.

Cette formule (4) tient compte du couple fourni par le cylindre i en détente successivement aux demi-tours k-4 et k.

Dans la mesure du temps nécessaire pour que le moteur fasse un demi-tour de vilebrequin, l'origine des demi-tours peut être légèrement décalée par rapport au Point Mort Haut des cylindres, afin que l'origine soit mieux centrée sur la combustion des cylindres.

Selon une variante du. procédé de contrôle, le calculateur contrôle la masse d'air admise dans chaque cylindre au lieu de la masse d'essence. Dans ce cas, $M_i$ représente la masse d'air dans le cylindre i.

Ainsi, le procédé de contrôle selon l'invention corrige la masse d'essence injectée dans chaque cylindre pour qu'ils fournissent tous le même couple au vilebrequin. La moyenne des masses de carburant $M_i$ injectée dans chaque cylindre est égale à $M_0$, ce qui montre que le procédé, tout en équilibrant les masses injectées par les quatre injecteurs, n'augmente pas la moyenne de la masse d'essence, donc n'augmente pas le couple produit par le moteur.

**Revendications**

1. Procédé de contrôle du couple produit par chacun des quatre cylindres entraînant en rotation le vilebrequin dans un moteur à combustion interne de véhicule automobile, dont le fonctionnement est piloté par un calculateur électronique de contrôle, comportant une étape d'estimation du couple pendant chaque demi-tour de vilebrequin, **caractérisé en ce qu'**il comporte de plus les étapes suivantes , réalisées par le calculateur de contrôle moteur :

   - la mesure et la mémorisation de la durée ($T_k$) des demi-tours successifs du vilebrequin, d'ordre k variant de 1 à N ;
   - l'estimation de l'écart de couple ($\Delta C^i_k$) dû au cylindre i, i étant un entier variant de 1 à 4, en détente pendant le demi-tour k par rapport aux trois autres cylindres du moteur, selon la formule :

$$\Delta C^i_k = (C_{K-1} + C_{k+1})/3 + (C_{K-2} + C_{k+2})/6 - C_K$$

   avec $C_k$ : le couple estimé pendant le demi-tour k,
   et la somme des écarts de couple dus aux quatre cylindres étant nulle.

2. Procédé de contrôle selon la revendication 1, **caractérisé en ce que** l'estimation du couple pendant le demi-tour k prend en compte la différence de durée ($T_k - T_{-1}$) entre le demi-tour d'ordre k et le demi-tour d'ordre k-1, selon la formule dans laquelle K est une constante :

$$C_k = K*(Tk - Tk-1)/(Tk)^3$$

   et **en ce que** l'écart de couple ($\Delta C^i_k$) mesuré par le calculateur électronique devient :

$$\Delta C^i_k = K*[8(T_k-T_{k-1})+T_{k-2}+-T_{k-3}-T_{k+2}-T_{k+1}]/(T_k)^3$$

3. Procédé de contrôle selon la revendication 1 ou 2, **caractérisé en ce qu'**il comporte de plus une étape de régulation de la masse d'essence ($M_i$) qui doit être injectée dans le cylindre i, i variant de 1 à 4, au Point Mort Haut d'ordre k, à partir de la masse $M_0$ déterminée initialement par le calculateur de contrôle moteur en fonction de la demande de couple formulée par le conducteur du véhicule, et d'un coefficient de filtrage ($\Delta\Omega^i_k$), qui est calculé après chaque nouveau calcul de l'écart de couple ($\Delta C^i_k$) par la formule :

$$\Delta\Omega^i_k = \Delta\Omega^i_{k-4} + \alpha * [(\Delta C^i_k/C_k) - \Delta\Omega^i_{k-4}]$$

   avec $\alpha$ : facteur compris entre 0 et 1.

4. Procédé de contrôle selon la revendication 1 ou 2, **caractérisé en ce qu'**il comporte de plus une étape de régulation de la masse d'air ($M_i$) qui doit être injectée dans le cylindre i, i variant de 1 à 4, au Point Mort Haut d'ordre k, à partir de la masse $M_0$ déterminée initialement par le calculateur de contrôle moteur en fonction de la demande de couple formulée par le conducteur du véhicule, et d'un coefficient de filtrage ($\Delta\Omega^i_k$), qui est calculé après chaque nouveau calcul de l'écart de couple ($\Delta C^i_k$) par la formule :

$$\Delta\Omega^i_k = \Delta\Omega^i_{k-4} + \alpha * [(\Delta C^i_k/C_k) - \Delta\Omega^i_{k-4}]$$

avec $\alpha$ : facteur compris entre 0 et 1.

**Claims**

1. A method of controlling the torque produced by each of the four cylinders driving in rotation the crankshaft in a motor vehicle internal combustion engine, the operation of which is controlled by an electronic engine management computer, comprising a step of estimating the torque during each half-revolution of the crankshaft, **characterised in that** it also comprises the following steps performed by the engine management computer:

   - measuring and storing the duration ($T_k$) of the successive half-revolutions of the crankshaft of order k, k varying from 1 to N;

   - estimating the torque difference ($\Delta C^i_k$) due to the cylinder i, i being an integer varying from 1 to 4, in expansion during the half-revolution k with respect to the other three cylinders of the engine, in accordance with the formula:

   $$\Delta C^i_k = (C_{k-1} + C_{k+1})/3 + (C_{k-2} + C_{k+2})/6 - C_k$$

   with $C_k$: the torque estimated during the half-revolution k, and the sum of the differences in torque which are due to the four cylinders being zero.

2. A control method according to claim 1 **characterised in that** estimation of the torque during the half-revolution k takes account of the difference in duration ($T_k - T_{-1}$) between the half-revolution of order k and the half-revolution of order k-1, in accordance with the formula in which K is a constant:

   $$C_k = K*(Tk - Tk\text{-}1) / (Tk)^3$$

   and that the torque difference ($\Delta C^i_k$) measured by the electronic computer becomes:

   $$\Delta C^i_k = K*[8(T_k\text{-}T_{k-1})+T_{k-2}+\text{-}T_{k-3}\text{-}T_{k+2}\text{-}T_{k+1}] / (T_k)^3.$$

3. A control method according to claim 1 or claim 2 **characterised in that** it further comprises a step of regulating the mass of petrol ($M_i$) which is to be injected into the cylinder i, i varying from 1 to 4, at the top dead centre of order k, from the mass $M_0$ initially determined by the engine management computer in dependence on the torque demand of the driver of the vehicle, and a filter coefficient ($\Delta\Omega^i_k$) which is calculated after each new calculation of the difference in torque ($\Delta C^i_k$) by the formula:

   $$\Delta\Omega^i_k = \Delta\Omega^i_{k-4} + \alpha * [(\Delta C^i_k/C_k) - \Delta\Omega^i_{k-4}]$$

   with $\alpha$: a factor between 0 and 1.

4. A control method according to claim 1 or claim 2 **characterised in that** it further comprises a step of regulating the mass of air ($M_i$) which is to be injected into the cylinder i, i varying from 1 to 4, at the top dead centre of order k, from the mass $M_0$ initially determined by the engine management computer in dependence on the torque demand of the driver of the vehicle, and a filter coefficient ($\Delta\Omega^i_k$) which is calculated after each new calculation of the difference in torque ($\Delta C^i_k$) by the formula:

$$\Delta\Omega^i_k = \Delta\Omega^i_{k-4} + \alpha * [(\Delta C^i_k/C_k) - \Delta\Omega^i_{k-4}]$$

with $\alpha$: a factor between 0 and 1.

**Patentansprüche**

1. Verfahren zur Regelung des Momentes, welches durch jeden von vier Zylindern erzeugt wird, welche in Drehung die Kurbelwelle in einem Verbrennungsmotor eines Kraftfahrzeugs antreiben, dessen Betrieb durch einen elektronischen Steuer-Rechner gesteuert wird, aufweisend einen Schritt einer Schätzung des Momentes während jeder Halbdrehung der Kurbelwelle
   **dadurch gekennzeichnet, dass** es außerdem die folgenden Schritte, welche durch den Steuer-Rechner des Motors realisiert werden, aufweist:

   - das Messen und das Speichern der Dauer ($T_k$) von aufeinander folgenden Halbdrehungen der Kurbelwelle, wobei die Reihe k von 1 bis N variiert;
   - Schätzen der Abweichung des Momentes ($\Delta C^i_k$), welches von dem Zylinder i herkommt, wobei i ein ganzer variabler Wert von 1 bis 4 ist, bei dem Entspannen während der Halbdrehung k im Verhältnis zu den drei anderen Zylindern des Motors gemäß der Formel:

$$\Delta C^i_k = (C_{k-1} + C_{k+1}) / 3 + (C_{k-2} + C_{k+2}) / 6 - C_k$$

   mit $C_k$: das geschätzte Moment während der Halbdrehung k, wobei die Summe der Abweichungen der Momente herrührend von den vier Zylindern null ist.

2. Verfahren zur Regelung gemäß Anspruch 1, **dadurch gekennzeichnet, dass** die Schätzung des Momentes während der Halbdrehung k die Differenz der Dauer ($T_k - T_{k-1}$) zwischen der Halbdrehung der Abfolge k und der Halbdrehung der Abfolge k-1 berücksichtigt gemäß der Formel, in welcher K eine Konstante ist:

$$C_k = K*(Tk - Tk\text{-}1) / (Tk)^3$$

   und dadurch, dass die Abweichung des Momentes ($\Delta C^i_k$), welche durch den elektronischen Rechner gemessen wird, festgelegt wird als:

$$\Delta C^i_k = K* [8 (T_k - T_{k-1}) + T_{k-2} + - T_{k-3} - T_{k+2} - T_{k+1}]/(T_k)^3$$

3. Verfahren zur Regelung gemäß Anspruch 1 oder 2, **dadurch gekennzeichnet, dass** es des Weiteren einen Schritt einer Regelung der Kraftstoffmenge ($M_i$) aufweist, welche in den Zylinder i eingespritzt werden muss, wobei i von 1 bis 4 variiert, im oberen Totpunkt der Abfolge k, ausgehend von der Menge $M_0$, welche ursprünglich durch den Steuer-Rechner des Motors in Abhängigkeit von dem geforderten Moment bestimmt wird, welches durch den Fahrer des Fahrzeugs ausgedrückt wird, und einem Glättungskoeffizienten ($\Delta\Omega^i_k$), welcher nach jeder erneuten Berechnung der Abweichung des Moments ($\Delta C^i_k$) durch die Formel berechnet wird:

$$\Delta\Omega^i_k = \Delta\Omega^i_{k-4} + \alpha * [(\Delta C^i_k/C_k) - \Delta\Omega^i_{k-4}]$$

   mit $\alpha$: ein Faktor, der zwischen 0 und 1 enthalten ist.

4. Verfahren zur Regelung gemäß Anspruch 1 oder 2, **dadurch gekennzeichnet, dass** es weiterhin einen Schritt einer Regelung der Luftmenge ($M_i$) aufweist, welche in dem Zylinder i eingeführt werden muss, wobei i von 1 bis 4 variiert, im oberen Totpunkt der Abfolge k, ausgehend von der Menge $M_0$, welche ursprünglich durch den Steuer-Rechner des Motors in Abhängigkeit des von dem Fahrer des Fahrzeugs geforderten Momentes bestimmt wurde, und einem Glättungskoeffizienten ($\Delta\Omega^i_k$), welcher nach jeder erneuten Berechnung der Abweichung des Momentes ($\Delta C^i_k$) durch die Formel berechnet wird:

$$\Delta\Omega^i_k = \Delta\Omega^i_{k-4} + \alpha * [(\Delta C^i_k/C_k) - \Delta\Omega^i_{k-4}]$$

mit $\alpha$: ein Faktor, der zwischen 0 und 1 enthalten ist.

# FIG_1

# FIG_2

| | 0 | 180° | 360° | 540° | 720° |
|---|---|---|---|---|---|
| Cylindre 1 | Détente | Echappement | Admission | Compression | |
| Cylindre 2 | Echappement | Admission | Compression | Détente | |
| Cylindre 3 | Compression | Détente | Echappement | Admission | |
| Cylindre 4 | Admission | Compression | Détente | Echappement | |
| Ordre de l'allumage | 1 | 3 | 4 | 2 | |